# FASCICULE DE BREVET EUROPEEN

(11) **EP 1 530 521 B1**
(45) Date de publication et mention de la délivrance du brevet: **16.03.2011**
(21) Numéro de dépôt: 03753668.7
(22) Date de dépôt: 05.08.2003
(51) Int. Cl.: B60D 1/06, B60D 1/00, B60D 1/50

(54) **CHARIOT DE TRANSPORT ET DE MANUTENTION**
HANDHABUNGS- UND TRANSPORTWAGEN
TRANSPORT AND HANDLING TRUCK

(30) Priorité: 19.08.2002 FR 0210381
(43) Date de publication de la demande: 18.05.2005
(73) Titulaire: COUTIER INDUSTRIE, 57100 Thionville (FR)
(72) Inventeur: COUTIER, Charles, F-57570 Cattenom (FR)
(74) Mandataire: Robert, Jean-Pierre
(86) Numéro de dépôt international: PCT/FR2003/002461
(87) Numéro de publication internationale: WO 2004/016456

(56) Documents cités:
- WO-A-00/66376
- DE-A- 3 340 344
- DE-A- 10 059 256
- DE-A- 19 810 378
- DE-B- 1 225 056
- DE-C- 642 847
- FR-A- 922 849
- FR-A- 2 458 247
- FR-A- 2 565 542
- FR-A- 2 829 984
- FR-A- 2 843 563
- US-A- 3 779 653
- US-A- 3 827 724
- US-A- 4 351 541
- US-A- 4 613 146

## Description

Les chariots de manutention utilisés, notamment dans les ateliers, sont généralement équipés d'un timon pour leur manoeuvre et/ou leur attelage, voir FR922849.

Ce timon est formé par une pièce métallique dont une extrémité est articulée au châssis du chariot autour d'un axe sensiblement horizontal et dont l'autre extrémité est pourvue d'un anneau d'attelage. Dans certains cas, l'articulation du timon au châssis est réalisée par l'intermédiaire d'un essieu directeur.

Les timons usuels sont en général des barres métalliques relativement pesantes qui sont une source importante de bruit lors de la manoeuvre des chariots. En effet, tant au niveau de l'axe de l'articulation qu'au niveau de l'attelage, il existe nécessairement des jeux mécaniques, qui augmentent au cours de l'utilisation du fait de l'usure et qui engendrent des chocs lors de la manoeuvre du chariot au moment des accélérations, des freinage et au passage des irrégularités du sol. La barre métallique pleine constitue un amplificateur de bruit du fait de ses capacités à résonner. Il s'agit là d'une source de pollution sonore importante que l'on cherche à supprimer.

Un autre inconvénient des dispositifs connus réside dans le poids important des timons. Ceux-ci, en métal massif, sont mal commodes à manipuler à la main entre une position de travail dans laquelle ils s'étendent longitudinalement et horizontalement à partir du chariots et une position de repos dans laquelle, pour diminuer l'encombrement du chariot, le timon est remonté verticalement à l'avant du chariot. En outre, à cause de ce poids important, le maintien vertical du timon doit être assuré de manière certaine contre son rabattement spontané. Le verrouillage de cette position est obtenu en ayant prévu que l'articulation du timon au chariot soit réalisée par l'intermédiaire d'une lumière longitudinale dans le timon, traversée par l'axe d'articulation, de sorte qu'au relevage du timon il se produise un glissement vers le bas de ce dernier par rapport à l'axe d'articulation, sous son propre poids, le long de la lumière. Alors le timon est engagé contre une butée anti-basculement et y est maintenu par son propre poids. Cela demande à l'utilisateur d'exercer un soulèvement du timon pour le remettre en position de service. Il s'agit d'une opération pénible car le timon est lourd et dangereuse si ce dernier échappe des mains de l'utilisateur. La lumière augmente encore la production de bruit au niveau de l'articulation du timon au châssis du chariot.

On mentionnera également le caractère fastidieux de l'attelage et du dételage des chariots lorsque ceux-ci sont équipés d'anneaux et de crochets.

On a par ailleurs constaté que l'organisation moderne des ateliers, notamment de montage et d'assemblage, impliquait une utilisation rationnelle et optimale de la surface au sol. Tout économie de surface est recherchée et en particulier celle affectée aux zones de circulation. Un train de chariots d'atelier demande, dans les virages, une piste de passage relativement large et en tout cas plus large que lors d'une trajectoire rectiligne car, compte tenu des jeux dans les attelages anneau/crochet, le dernier chariot du train roule bien en dehors des traces du premier chariot voire du tracteur. En outre dans les virages, la génération de bruit est accrue car le changement de direction d'un chariot se traduit par des chocs entre l'anneau et le crochet de chaque attelage tout au long du virage pris par le train de chariots.

Par la présente invention on entend répondre de manière plus satisfaisante aux besoins de manutention par chariots qui existent dans les entreprises industrielles et notamment dans le domaine de la construction automobile, où ceux-ci sont de plus en plus employés aux lieu et place de convoyeurs fixes, peu compatibles avec la flexibilité que les lignes de fabrication ont acquise grâce à une évolution spectaculaire de la robotique.

A cet effet l'invention a pour objet un chariot de transport et de manutention notamment pour ateliers, comportant un bâti avec deux extrémités longitudinales, un timon articulé à une extrémité longitudinale du bâti autour d'un axe horizontal et comportant à son extrémité libre un moyen pour assurer sa liaison temporaire avec un organe de traction et un organe d'attelage solidaire de l'autre extrémité longitudinale du bâti formant organe de traction pour un chariot suivant, dans lequel le moyen de traction et le moyen de liaison temporaire susdits comportent une sphère et un boîtier pour emboîter la sphère.

Cette disposition de chaque chariot permet une liaison par articulation/rotule de chacun des chariots d'un train de chariots d'atelier formant un attelage sans jeu donc silencieux et grâce auquel les chariots d'un train (en général cinq ou six chariots) suivent pratiquement tous la même trajectoire.

Au cours de son utilisation, un chariot est incorporé dans un grand nombre de trains ou de convois et sa place dans un convoi est totalement aléatoire. C'est pourquoi chaque attelage doit être conçu comme devant pouvoir résister à la traction de l'ensemble du train. Aussi conformément à un aspect de l'invention et pour ne pas avoir à surdimensionner exagérément chaque couple sphère/boîtier, le moyen de traction susdit comprend la sphère tandis que le moyen de liaison temporaire comprend le boîtier et un loquet à masselotte est articulé au moyen de traction et s'étend sous l'effet de la gravité au moins partiellement au-dessus de la sphère pour constituer un levier escamotable entravant le boîtier engagé sur la sphère.

En effet, alors que les dispositifs à sphère ou boule d'attelage sont bien connus dans leur utilisation pour la liaison d'une remorque ou d'une caravane à un véhicule automobile, ils n'ont jamais été employés ni dans un train de remorques, ni dans le domaine des chariots de manutention car le verrou de sécurité qu'ils comprennent est une pièce relativement fragile qui n'est pas adaptée à de nombreuses manipulations d'ouverture et de fermeture et aux accélérations et décélérations incessantes que subit l'attelage dans les ateliers de fabrication. Malgré ce préjugé, l'invention comporte ce type d'attelage à boule ou sphère et le loquet interdit tout dételage intempestif et notamment lors d'une rupture du verrou à la suite des nombreuses sollicitations qu'il subit dans ce type d'utilisation. L'un des avantages de ce verrouillage supplémentaire sous la forme d'un loquet à masselotte est qu'il est d'une très grande robustesse puisqu'il ne met en oeuvre aucun dispositif élastique dont on sait qu'ils sont sensibles aux contraintes alternées de fatigue. En outre, ce loquet à masselotte peut être bloqué dans sa position naturelle avant ou après que le boîtier a coiffé la sphère, de manière à interdire l'attelage ou le dételage d'un chariot suivant. Ce blocage peut être réalisé par un moyen extrêmement simple du genre goupille, doigt ou butée d'arrêt que l'on peut associer à une serrure ou tout simplement être formé par un cadenas.

Par ailleurs, afin d'imposer à l'opérateur un acte volontaire d'attelage, ce qui est un gage supplémentaire de sécurité, le chariot de l'invention est tel que le timon est articulé sur le bâti entre une position haute sensiblement verticale et une position basse dans laquelle il est en appui ou est maintenu sur un organe élastique du chariot et dans laquelle le boîtier est alors situé à.un niveau supérieur à celui du sommet de la sphère du moyen de traction. Ainsi, l'opérateur pour réaliser l'attelage doit-il mettre en regard le boîtier et la sphère et exercer un effort de haut en bas sur le boîtier pour vaincre l'effet de l'organe élastique sur le timon et ce jusqu'à l'enclenchement du verrou. Ce n'est qu'après avoir atteint cette position que le loquet à masselotte qui s'est escamoté au moment de l'emboîtement du boîtier sur la sphère revient librement sous l'effet de la gravité pour s'étendre partiellement au-dessus du boîtier, de préférence sans contact avec lui mais en contact avec une butée qui interdit sa rotation autour de son axe d'articulation sous l'effet d'un soulèvement du boîtier.

Un autre avantage de cette « butée » élastique du timon en position basse réside dans le fait que l'effort nécessaire à la compression ou au bandage du ressort pour réaliser l'attelage engendre une réaction entre le timon et le bâti du chariot qui, comme on le verra au cours de la description ci-après, tend à plaquer sur le sol la roue avant folle du chariot, supprimant ainsi les occasions qu'elle avait de quitter le contact du sol et donc évitant qu'elle ne fouette avec génération de bruit.

Pour obtenir le plein avantage des dispositions de l'invention, il convient que le timon soit relativement léger et, de manière avantageuse, dans ce but, il est constitué par une structure en caisson remplie d'un matériau d'absorption acoustique tel qu'une matière plastique en mousse. Cette matière plastique contribue à l'insonorisation ou à l'étouffement des bruits engendrés par les chocs que subit l'attelage.

Enfin, puisque selon l'invention on dispose d'un timon de faible poids, il est possible de prévoir conformément à l'invention un chariot équipé d'un tel timon et d'un moyen de maintien par encliquetage de ce timon en position haute sensiblement verticale. Ce moyen de maintien par encliquetage est constitué par une ouverture ménagée dans le timon et par une lame de ressort orthogonale à l'axe d'articulation du timon sur le chariot, pourvue à son extrémité d'une dent pénétrant dans l'ouverture du timon en s'effaçant élastiquement en direction de l'axe d'articulation au relevage de ce timon pour s'encliqueter élastiquement derrière le bord arrière de cette ouverture à la fin du relevage. Comme le timon est léger, ce relevage peut être facilement effectué par un opérateur qui sera donc incité à le faire plus volontiers et ainsi à diminuer l'encombrement du chariot, ce qui est avantageux dans les unités de production industrielle modernes.

D'autres caractéristiques et avantages de l'invention ressortiront de la description d'un de ses modes de réalisation donnés ci-après à titre d'exemples.

Il sera fait référence aux dessins annexés parmi lesquels :
- la figure 1 est une vue schématique d'un train de chariots conformes à l'invention,
- la figure 2 est une vue extérieure d'un dispositif d'attelage mis en oeuvre dans les chariots de l'invention,
- les figures 3, 4 et 5 illustrent par des schémas trois séquences de la procédure d'attelage,
- les figures 6, 7 et 8 illustrent l'avant d'un chariot selon l'invention,
- les figures 9 et 10 illustrent un mode de réalisation préféré d'un timon de chariot conforme à l'invention.

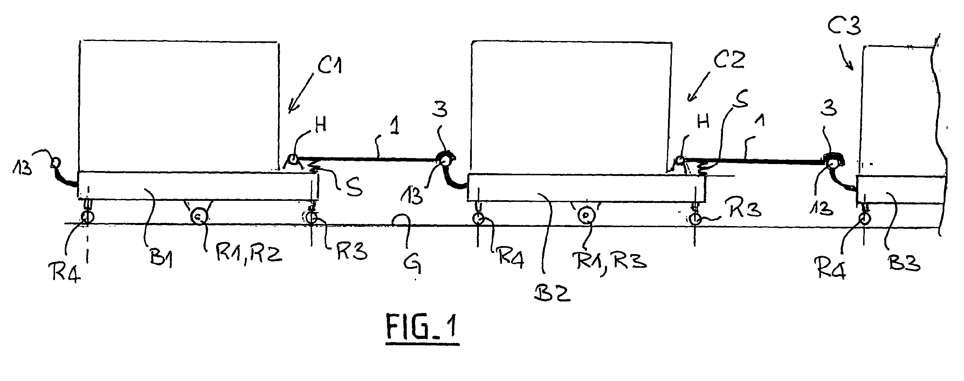

Le schéma de la figure 1 représente trois chariots C1, C2, C3 qui, conformément à l'invention comportent un bâti B1, B2, B3 pourvu de roues inférieures, à savoir deux roues centrales fixes R1, R2, une roue avant folle R3 et une roue arrière folle R4.

A l'extrémité longitudinale avant du bâti, chaque chariot comporte un timon 1 articulé autour d'un axe horizontal H et pourvu à son extrémité libre d'un boîtier 3 pour coopérer avec une sphère 13 prévue à l'autre extrémité longitudinale de chaque bâti. Un verrou connu en lui-même assure le maintien de l'emboîtement. Un ressort S oppose au timon 1 une force qui équilibre son poids de sorte que le boîtier 3 est maintenu au-dessus du niveau de la sphère 13 sans une action vers le bas appliquée sur le timon pour assurer volontairement l'emboîtement. Ce ressort S peut être conçu de toute manière appropriée et notamment intégré dans l'articulation H pour engendrer le couple résistant à l'abaissement spontané du timon au-delà d'une position déterminée. On comprend que les efforts qui règnent dans l'attelage grâce au ressort tendent à plaquer la roue avant folle R3 de chaque chariot sur le sol G, surtout quand le chariot est vide, ce qui évite tout aléa dans le contact de cette roue avec le sol donc tout choc, fouettement et autre mouvement saccadé générateur de bruit. En outre, la précontrainte de l'attelage due à cet organe élastique constitue un rattrapage automatique des jeux, ce qui limite les usures. D'autres avantages de cet organe élastique S (ou tout équivalent) seront décrits ci-après.

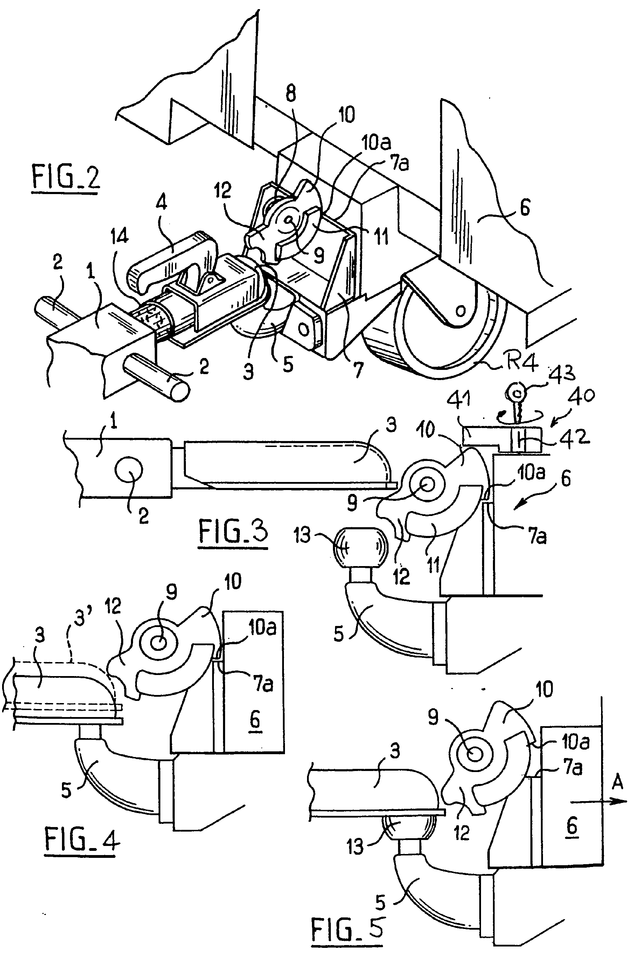

A la figure 2, on a représenté l'extrémité libre du timon 1 avec des poignées 2 de sa manoeuvre manuelle, qui comporte le boîtier d'attelage 3, connu en lui-même et comprenant le verrou évoqué ci-dessus dont on distingue la poignée de manoeuvre 4.

Le boîtier 3 coiffe la boule ou sphère d'attelage non visible sur la figure 1 ménagée à l'extrémité libre d'une potence 5 fixée à l'arrière d'un moyen d'entraînement 6. Ce moyen d'entraînement 6 peut être soit un chariot identique à celui qui comporte le timon 1, soit un tracteur auto-moteur. L'arrière du chariot ou tracteur 6 est équipé d'une platine 7 qui comporte un palier 8 pour un axe d'articulation 9 d'un loquet à masselotte 10. La masselotte 11 de ce loquet lui confère une position stable autour de son axe d'articulation 9 dans laquelle l'une des extrémité du loquet 10a repose sur le bord supérieur 7a de la platine 7. A l'opposé du bec 10a du loquet 10, ce dernier comporte une extension 12 qui s'étend au-dessus du boîtier 3 coiffant la boule d'attelage. Ainsi, si le verrou intégré au boîtier 3 vient à se rompre, ce boîtier ne peut pas se dégager de la boule vers le haut car il rencontre l'extension 12 du loquet 10 qui ne peut pas tourner autour de l'axe 9 puisqu'il est en butée contre le rebord 7a de la platine 7.

Ce loquet 10 est d'une efficacité supérieure aux chaînes de sécurité qui, habituellement, sont installées entre un moyen d'entraînement et un chariot.

A la figure 3, on a représenté les positions relatives du boîtier 3 et de la boule 13 d'attelage avant la réalisation complète de ce dernier. On comprend que pour réaliser cet attelage, il convient de coiffer la boule 13 par le boîtier 3. Dans ce mouvement, le boîtier vient en interférence avec le loquet 10 et repousse l'extension 12 pour faire tourner le loquet dans le sens de l'éloignement du bec 10a de la butée 7a. La forme du profil de l'extension 12 est réalisée pour que cette rotation puisse librement s'effectuer. Lorsque l'emboîtement est complètement réalisé comme représenté à la figure 4, le loquet retourne à sa position stable sous l'effet de la gravité appliquée à la masselotte qui forme balourd autour de l'axe 9, et l'extension 12 s'étend au-dessus du boîtier 3 interdisant son dégagement de la boule d'attelage puisque ce boîtier, lorsqu'il atteint la position 3' vient buter contre l'extension 12 qui ne peut plus tourner du fait des appuis 10a, 7a.

La figure 5 illustre la position relative au boîtier de la boule d'attelage alors que l'emboîtement n'est pas complètement réalisé. Dans cette position, le loquet 10 n'empêche pas le déboîtement complet du boîtier et de la boule lorsque le moyen d'entraînement 6 se déplace selon la flèche A. L'opérateur constatera alors que l'attelage n'a pas été réalisé dès le démarrage du convoi ou du train de chariots, ce qui évitera un entraînement du chariot dans des conditions dangereuses de mauvais attelage.

Afin de rendre la transmission des efforts de traction plus progressive au démarrage d'un train de chariot, le timon 1 et le boîtier 3 sont rendus solidaires l'un de l'autre par un moyen élastique extensible et compressible dans la direction de l'effort de traction et représenté schématiquement en 14 à la figure 1.

On a représenté à la figure 3 un organe 40 de condamnation du pivotement du loquet 10 autour de l'axe 9. Cet organe est ici représenté en position active interdisant l'emboîtement de la sphère 13 par le boîtier 3 tel que décrit ci-dessus. Il est constitué par une butée 31 pivotante autour d'un axe 42 entre une position active comme représentée, bloquant le loquet et une position inactive à l'extérieur du trajet du loquet lors de son pivotement autour de l'axe 9. Ces positions peuvent être verrouillées par tout moyen adapté symbolisé par une clé 43. Le loquet 10 dans un mode de réalisation non représenté peut pivoter le long d'une paroi et, au moyen d'une goupille traversant le loquet et la paroi, on peut également bloquer son pivotement.

On notera que, par cette condamnation, on peut assurer le contrôle soit de l'attelage d'un chariot à un autre soit son dételage car la condamnation peut également être activée après réalisation de l'attelage.

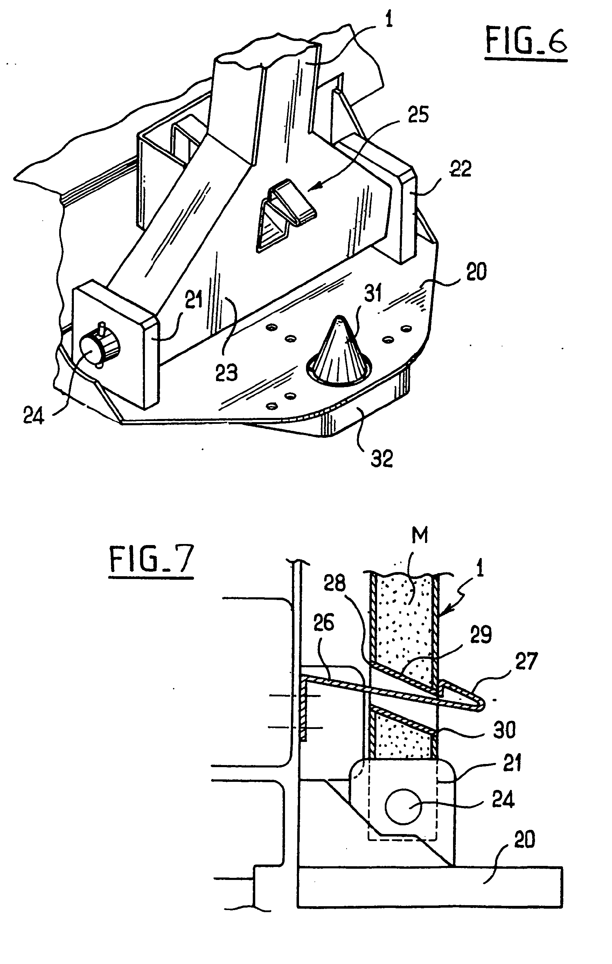

L'autre extrémité du timon 1 est représentée aux figures 6, 7 et 8. Sur ces figures, l'avant du bâti du chariot comporte une base d'attelage 20 avec deux paliers 21, 22 pour l'articulation du timon. Ce dernier comporte une barre transversale 23 formant traverse pour le support de tourillons d'articulation tel que 24. La traverse 23 est ici en forme de triangle pour rigidifier sa liaison avec la partie longitudinale du timon 1. Ce dernier est représenté à la figure 6 dans sa position haute, c'est-à-dire sensiblement verticale. Il est maintenu dans cette position par des moyens d'encliquetage 25 qui seront décrits plus en détail en regard de la figure 7.

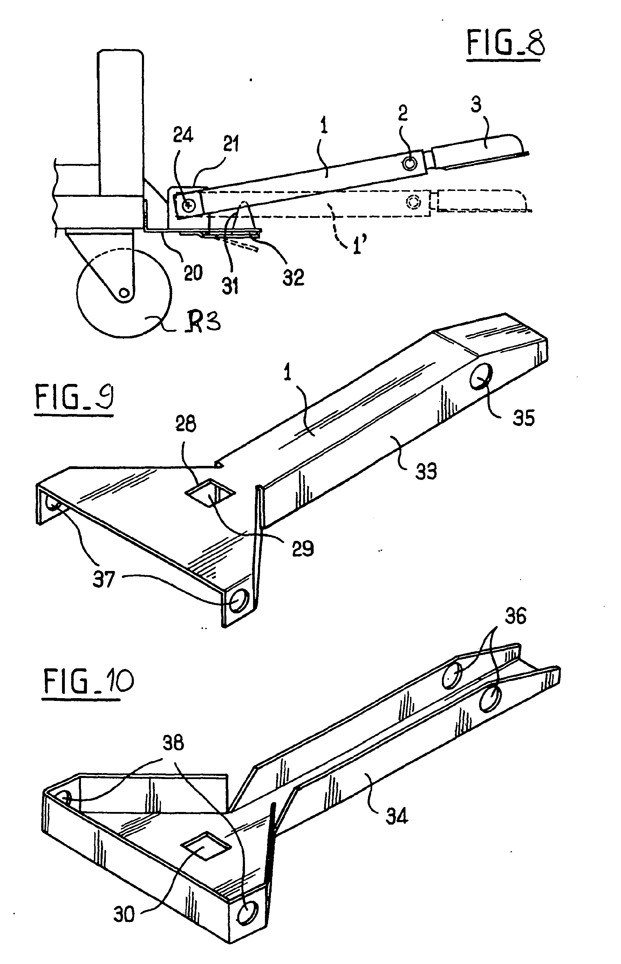

A cette figure, on a représenté partiellement en coupe le timon 1 dans sa position de la figure 6, retenu dans cette position par les moyens de maintien 25. Ces moyens de maintien comprennent une lame élastique 26, rapportée sur une paroi frontale du chariot pour s'étendre au-dessus de l'axe d'articulation défini par les paliers 21, 22 sur la base d'attelage 20. Cette lame 26 est conformée en une dent 27 d'extrémité. La position de cette lame est telle que, lorsqu'on relève le timon 1 depuis sa position basse vers la position représentée, la lame élastique 26 pénètre dans une ouverture de façade 28 et est forcée à fléchir élastiquement en direction de l'axe d'articulation par les parois d'un passage tubulaire 29 dans le timon qui sont inclinées, jusqu'à ce que la dent 27 ait passé l'ouverture 30 du timon 1 hors de laquelle elle revient élastiquement pour s'encliqueter derrière le timon lorsque l'on considère le sens de relevage ou devant celui-ci lorsque l'on considère le sens contraire. Cette retenue par encliquetage est possible du fait que le timon a une structure légère et notamment une structure en caisson comme représenté aux figures 8 et 9, la dent 27 exerçant un effort largement suffisant pour le maintenir en position sensiblement verticale quels que soient les efforts brusques auxquels peut être soumis le chariot.

D'autres moyens élastiques avec une dent de retenue du timon peuvent être mis en place sur le côté du timon au lieu de le traverser. Ces moyens ont un fonctionnement équivalent résultant de la légèreté du timon.

Ainsi, l'opérateur pour placer le timon de sa position haute à sa position de service, appuie-t-il sur la dent 27 avec le pied pour faire fléchir la lame 26 afin que cette dent puisse pénétrer à nouveau dans l'ouverture tubulaire 29 et autoriser le rabattement du timon.

La position basse du timon 1 est représentée à la figure 8. Dans cette position, le timon repose sur un tampon de caoutchouc 31 qui fait saillie au-delà de la base d'attelage 20 et qui est porté par une lame de ressort 32 située sous cette base d'attelage et pouvant fléchir lorsqu'on exerce sur le timon un effort vers le bas pour le faire passer dans sa position l'en trait pointillé de la figure 8.

Le poids propre du timon n'est pas suffisant pour faire fléchir l'ensemble élastique constitué par le tampon 31 et la lame de ressort 32, si bien que le boîtier 3 en extrémité se trouve arrêté à un certain niveau par rapport au sol, niveau qui est toujours supérieur au niveau de la boule 13 d'attelage de l'organe d'entraînement auquel le chariot doit être attelé, que cet organe d'entraînement soit un dispositif moteur ou un chariot précédent. On comprend que par cette disposition il ne peut pas exister d'attelage sans une intervention volontaire d'un opérateur qui force le timon à descendre à l'encontre de son rappel élastique 31, 32. L'opérateur est d'ailleurs incité à réaliser cette intervention volontaire car la condition de non-attelage est perceptible à l'oeil même de loin. La légèreté du timon 1 est là aussi un avantage de l'invention.

L'un des modes préférés de réalisation du timon de l'invention est représenté aux figues 9 et 10 qui illustrent respectivement deux demi-caissons 33 et 34 qui une fois emboîtés et assemblés, constituent le timon 1. Le demi-caisson 33 est tel qu'il vient coiffer et s'emboîter par-dessus le demi-caisson 34. Dans l'état d'emboîtement, les orifices 35 du demi-caisson 33 et 36 du demi-caisson 34, ainsi que les orifices 37 et 38 de ces deux caissons sont en face les uns des autres de manière à définir les paliers ou les moyens de fixation pour d'une part la poignée 2 et d'autre part les tourillons 24 d'articulation du timon au châssis du chariot. Le demi-caisson 33 possède en outre une ouverture de façade 28 prolongée vers l'intérieur par un tube carré 29 qui vient coïncider avec l'ouverture de façade 30 du demi-caisson 34.

Soit avant de constituer le caisson fermé soit après sa constitution, on emplit l'espace intérieur de celui-ci de matériau d'absorption acoustique. Il peut s'agir d'un matériau alvéolaire en mousse à base de matière plastique découpée et mise en place avant la constitution du timon ou d'un matériau qui est injecté à l'état liquide et qui vient mousser à l'intérieur du caisson déjà constitué (voir la référence M à la figure 7). Le matériau est léger, ce qui n'affecte pas la maniabilité du timon.

## Revendications

1. Chariot de transport et de manutention notamment pour ateliers, comportant un bâti (B) avec deux extrémités longitudinales, un timon (1) articulé à une extrémité longitudinale du bâti autour d'un axe horizontal (H) et comportant à son extrémité libre un moyen pour assurer sa liaison temporaire avec un organe de traction (13) et un organe d'attelage solidaire de l'autre extrémité longitudinale du bâti formant organe de traction pour un chariot suivant, **caractérisé en ce que** le moyen de traction (13) est une sphère solidaire du bâti (B) et le moyen d'attelage de liaison temporaire est un boîtier (3) porté par l'extrémité du timon (1) pour coiffer la sphère (13).

2. Chariot selon la revendication 1, **caractérisé en ce qu'**un loquet (10) à masselotte (11) est articulé au bâti (B) et s'étend sous l'effet de la gravité au moins partiellement au-dessus de la sphère pour constituer un levier escamotable entravant le boîtier (3) engagé sur la sphère.

3. Chariot selon la revendication 2, **caractérisé en ce que** le timon (1) est articulé sur le bâti du chariot entre une position haute sensiblement verticale et une position basse dans laquelle il est maintenu par un organe élastique (31, 32) du chariot et dans laquelle le boîtier (3) est situé à un niveau supérieur à celui du sommet de la sphère (13).

4. Chariot selon la revendication 2, **caractérisé en ce que** l'organe élastique est formé par une lame (32) de ressort surmontée d'un tampon (31) en élastomère.

5. Chariot selon l'une quelconque des revendications précédentes, **caractérisé en ce que** le boîtier (3) est solidaire de l'extrémité du timon au moyen d'un organe (14) compressible et extensible élastiquement dans la direction longitudinale du timon (1).

6. Chariot selon l'une quelconque des revendications précédentes, **caractérisé en ce que** le timon (1) est formé par une structure en caisson (33, 34) remplie d'un matériau (M) d'absorption acoustique.

7. Chariot selon la revendication 6, **caractérisé en ce que** le matériau acoustique est un matériau synthétique alvéolaire.

8. Chariot selon l'une quelconque des revendications précédentes, **caractérisé en ce qu'**il comporte un moyen (27) de maintien par encliquetage du timon (1) en position haute.

9. Chariot selon la revendication 8, **caractérisé en ce que** le timon (1) comprend une ouverture (28, 29, 30) et **en ce que** le moyen de maintien est constitué par une lame de ressort (26) orthogonale à l'axe 10 d'articulation (24) du timon sur le chariot, pourvu à son extrémité d'une dent (27) pénétrant dans l'ouverture du timon (1) en s'effaçant élastiquement en direction de l'articulation (24) au relevage de ce timon pour s'encliqueter élastiquement derrière le bord arrière de 15 l'ouverture à la fin du relevage.

10. Chariot selon l'une des revendications précédentes, **caractérisé en ce qu'**il comporte un organe (40) de condamnation du pivotement du loquet (10) à masselotte mobile entre une position active et une position inactive et verrouillable dans l'une et l'autre de ces positions.

## Claims

1. A transport and handling truck, in particular for a workshop, the truck comprising a chassis (B) with two longitudinal ends, a drawbar (1) hinged to one longitudinal end of the chassis about a horizontal axis (H), and including at its free end means for temporarily connecting it with a traction member (13), and a coupling member secured to the other longitudinal end of the chassis forming a traction member for a following truck, the truck being **characterized in that** the traction means (13) comprise a sphere secured to the chassis (B), and the coupling means for temporary connection comprise a socket (3) carried by the end of the drawbar (1) to cover the sphere (13).

2. A truck according to claim 1, **characterized in that** a catch (10) with a flyweight (11) is hinged to the chassis (B) and extends, under the effect of gravity, at least partially over the sphere so as to constitute a retractable lever obstructing engagement of the socket (3) on the sphere.

3. A truck according to claim 2, **characterized in that** the drawbar (1) is hinged to the chassis of the truck between a substantially vertical high position and a low position in which it is held by a resilient member (31, 32) of the truck and in which the socket (3) is situated at a level higher than that of the top of the sphere (13).

4. A truck according to claim 2, **characterized in that** the resilient member is formed by a spring blade (32) surmounted by an elastomer pad (31).

5. A truck according to any preceding claim, **characterized in that** the socket (3) is secured to the end of the drawbar by means of a member (14) that is elastically compressible and extensible in the longitudinal direction of the drawbar (1).

6. A truck according to any preceding claim, **characterized in that** the drawbar (1) is formed by a box structure (33, 34) filled with a sound absorption material (M).

7. A truck according to claim 6, **characterized in that** the sound absorption material is a cellular synthetic material.

8. A truck according to any preceding claim, **characterized in that** it includes maintaining means (27) for holding the drawbar (1) in the high position by snap-fastening.

9. A truck according to claim 8, **characterized in that** the drawbar (1) includes an opening (28, 29, 30), and **in that** the maintaining means are constituted by a spring blade (26) orthogonal to the hinge axis (24) between the drawbar and the truck, provided at its end with a tooth (27) that penetrates into an opening in the drawbar (1), retracting resiliently towards the hinge (24) when the drawbar is raised so as to snap-fasten resiliently behind the rear edge of the opening at the end of raising the bar.

10. A truck according to any preceding claim, **characterized in that** it includes a member (40) for preventing pivoting of the catch (10) having a flyweight that is movable between an active position and an inactive position and that is lockable in either of these positions.

## Patentansprüche

1. Transport- und Förderwagen, insbesondere für Werkstätten, umfassend ein Gestell (B) mit zwei Längsenden, eine Deichsel (1), die an einem Längsende des Gestells um eine horizontale Achse (H) angelenkt ist und an ihrem freien Ende Mittel umfasst, die dazu bestimmt sind, ihre temporäre Verbindung mit einem Zugelement (13) sicherzustellen, und ein Kupplungselement, das fest mit dem anderen Längsende des Gestells verbunden ist und ein Zugelement für einen nachfolgenden Wagen bildet, **dadurch gekennzeichnet, dass** das Zugelement (13) eine fest mit dem Gestell (B) verbundene Kugel ist und das Kupplungselement zur temporären Verbindung ein Gehäuse (3) ist, das von dem Ende der Deichsel (1) getragen wird, um die Kugel (13) zu übergreifen.

2. Wagen nach Anspruch 1, **dadurch gekennzeichnet, dass** eine Fallklinke (10) mit Stellgewicht (11) an dem Gestell (B) angelenkt ist und sich unter der Wirkung der Schwerkraft zumindest teilweise über der Kugel erstreckt, um einen ausrückbaren Hebel zu bilden, der das mit der Kugel in Eingriff stehende Gehäuse (3) sperrt.

3. Wagen nach Anspruch 2, **dadurch gekennzeichnet, dass** die Deichsel (1) an dem Gestell des Wagens zwischen einer oberen, im Wesentlichen vertikalen Position und einer unteren Position angelenkt ist, in der sie von einem elastischen Element (31, 32) des Wagens gehalten wird und in der sich das Gehäuse (3) auf einer Ebene befindet, die höher als die des höchsten Punktes der Kugel (13) liegt.

4. Wagen nach Anspruch 2, **dadurch gekennzeichnet, dass** das elastische Element aus einer Blattfeder (32) gebildet ist, auf der ein Puffer (31) aus Elastomer angeordnet ist.

5. Wagen nach einem der vorhergehenden Ansprüche, **dadurch gekennzeichnet, dass** das Gehäuse (3) fest mit dem Ende der Deichsel mittels eines in Längsrichtung der Deichsel (1) zusammendrückbaren und elastisch dehnbaren Elements (14) verbunden ist.

6. Wagen nach einem der vorhergehenden Ansprüche, **dadurch gekennzeichnet, dass** die Deichsel (1) aus einer Kastenstruktur (33, 34) gebildet ist, die mit einem Schallabsorptionsmaterial (M) gefüllt ist.

7. Wagen nach Anspruch 6, **dadurch gekennzeichnet, dass** das Schallmaterial ein synthetisches zelliges Material ist.

8. Wagen nach einem der vorhergehenden Ansprüche, **dadurch gekennzeichnet, dass** er Haltemittel (27) umfasst, die dazu bestimmt sind, die Deichsel (1) durch Einrasten in der oberen Position zu halten.

9. Wagen nach Anspruch 8, **dadurch gekennzeichnet, dass** die Deichsel (1) eine Öffnung (28, 29, 30) umfasst und dass die Haltemittel aus einer Blattfeder (26) gebildet sind, die orthogonal zur Gelenkverbindungsachse (24) der Gelenkverbindung der Deichsel am Wagen ist und an ihrem Ende mit einem Zahn (27) versehen ist, der in die Öffnung der Deichsel (1) eindringt, indem er beim Anheben dieser Deichsel elastisch in Richtung der Gelenkverbindung (24) zurückweicht, um am Ende des Anhebens elastisch hinter dem hinteren Rand der Öffnung einzurasten.

10. Wagen nach einem der vorhergehenden Ansprüche, **dadurch gekennzeichnet, dass** er ein Element (40) zur Verriegelung des Verschwenkens der Fallklinke (10) mit Stellgewicht umfasst, wobei das Element zwischen einer aktiven Position und einer inaktiven Position beweglich und in der einen und der anderen dieser Positionen verriegelbar ist.
